(19) Europäisches Patentamt
European Patent Office
Office européen des brevets

(11) EP 0 961 933 B1

(12) **EUROPEAN PATENT SPECIFICATION**

(45) Date of publication and mention of the grant of the patent:
**11.09.2002 Bulletin 2002/37**

(21) Application number: **98903913.6**

(22) Date of filing: **04.02.1998**

(51) Int Cl.$^7$: **G01N 27/42**

(86) International application number:
**PCT/US98/02069**

(87) International publication number:
**WO 98/037410 (27.08.1998 Gazette 1998/34)**

(54) **PROCESS OF MANUFACTURING AN ELECTROLYTIC CELL WITH RHODIUM ELECTRODES USEFUL FOR MEASURING WATER IN OXYGEN, HYDROGEN, AND INERT GASES**

VERFAHREN ZUR HERSTELLUNG EINER MIT RHODIUMELEKTRODEN VERSEHENEN ELEKTROLYTISCHEN ZELLE ZUR MESSUNG VON WASSER IN SAUERSTOFF WASSERSTOFF UND INERTEN GASEN

PROCEDE POUR FABRIQUER UNE CELLULE ELECTROLYTIQUE AVEC DES ELECTRODES EN RHODIUM SERVANT A MESURER LA CONCENTRATION D'EAU DANS DE L'OXYGENE, DE L'HYDROGENE, ET DES GAZ INERTES

(84) Designated Contracting States:
**CH DE FR GB IT LI NL**

(30) Priority: **19.02.1997 US 803196**

(43) Date of publication of application:
**08.12.1999 Bulletin 1999/49**

(73) Proprietor: **MEECO, INCORPORATED**
**Warrington, PA 18976 (US)**

(72) Inventor: **MacNEEL, Thomas, W.**
**Perkasie, PA 18944 (US)**

(74) Representative: **Pacitti, Paolo et al**
**Murgitroyd and Company**
**165-169 Scotland Street**
**Glasgow G5 8PL (GB)**

(56) References cited:
**EP-A- 0 330 377**
**US-A- 4 800 000**
**US-A- 4 990 236**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

### Field of the Invention

The present invention relates to a process of manufacturing an electrolytic cell with rhodium electrodes for automatically measuring the concentration of water in a sample gas flow, which may contain at least substantial amounts of hydrogen or oxygen, through the use of electrolytic hygrometry. More specifically, the process forms and treats the rhodium electrodes of the cell to suppress the error-causing recombination effect.

### Background of the Invention

In many industrial processes, the presence and amount of even minute moisture concentrations in flowing gas streams must be detected and measured with a high degree of speed and accuracy. The process of manufacturing semiconductors uses flowing gas streams, for example, and any moisture present in those streams affects production yield. If moisture concentrations exceed specified limits, the contaminated gas stream may produce, at considerable expense, an unacceptable semiconductor lot. Thus, detection and measurement of moisture concentration in industrial processes such as semiconductor production is required because moisture is often critical to the quality of the product made.

To meet the industrial demand, sensitive hygrometers are available which have extremely low detection and measurement limits. The most sensitive and commercially available hygrometers can detect and measure moisture concentrations on the order of ten parts per billion (ppb) by volume--although modern, high-purity hygrometers may reach limits of a few ppb. The prior art is replete with a variety of water detection and measurement devices, or hygrometers. These include infrared absorption-type hygrometers, conductivity cells, piezoelectric hygrometers, impedance-type hygrometers, mirror dew point apparatuses, gas chromatographs (which may include an electron capture detector), and electrolytic hygrometers. A general discussion of such devices is found in United States Patent No. 4,535,620, issued to Richard D. Cunningham.

K. Sugiyama & T. Ohmi, "Ultraclean Gas Delivery Systems--Part I," in Microcontamination at 49-54 (Nov. 1988), discloses that gases with moisture levels on the order of two parts per billion can be produced and that such levels can be measured by Atmospheric Pressure Ionization Mass Spectrometry (APIMS). See also T. Kimura, J. Mettes & M. Schack, "Sub-ppb Analysis of Nitrogen Gas by APIMS," presented at the Technical Symposium of SEMICON EAST 89 in Boston, Mass. (Sept. 1989) (disclosing an experimental setup and a procedure for the analysis of high-purity nitrogen).

The present invention focuses on the electrolytic hygrometer. This type of hygrometer operates under the principles of Faraday's Law and incorporates an electrolytic cell as the analytical component. One configuration of an electrolytic cell consists of a hollow glass tube with two electrodes helically wound around the inside and covered with a hygroscopic film such as phosphorous pentoxide ($P_2O_5$). The two electrodes, one a positive anode and the other a negative cathode, form a double helix. Typically, the electrodes are made of a noble metal such as platinum, gold, or- rhodium. The gas to be measured flows through the cell with a known flow rate.

The water concentration of the gas is determined in the following manner. The hygroscopic film absorbs the water from the gas. A voltage is supplied across the electrodes, which electrolyzes the water in the film into hydrogen and oxygen. The generated current is a measure of the rate at which the water molecules are electrolyzed. Once equilibrium is reached, the rate at which water molecules enter the cell will exactly match the rate at which such molecules are electrolyzed. Consequently, at a given flow rate the water concentration in the gas will be known without any further calibration. An example of a conventional electrolytic cell is described in United States Patent No. 4,800,000 to D.A. Zatko.

A phenomenon called the "recombination effect" can create large errors in the measurement of such electrolytic cells when the sample gas contains substantial amounts of hydrogen or oxygen. The effect refers to the recombination, if a catalyst is present, of hydrogen and oxygen in the cell to re-form water. Thus, a single water molecule can be detected more than once. The catalytic reaction of hydrogen and oxygen will occur on the surface of the precious metal electrodes. Both the noble metals and their oxides catalyze the recombination reaction.

The recombination effect is negligible in inert gases because hydrogen and oxygen produced by electrolysis are present only in very low concentrations. Thus, the probability of molecular collision and reaction of those species is exceedingly small. When the carrier gas contains substantial concentrations of hydrogen or oxygen, however, the probability of reaction increases. In hydrogen gas, for example, oxygen produced by electrolysis can easily collide with surrounding hydrogen and recombine to form water.

The mechanisms for electrolysis and recombination differ. The former is a forced reaction which occurs with energy input at the metal electrodes under the influence of a powerful DC electric field; recombination requires a catalyst and is highly exothermic. Electrolytic hygrometry, the recombination effect, and the factors which affect recombination

are described in D. Smith & J. Mitchell, Jr., Aquametry (Part II), pages 661-675 (2d ed. 1984); U.S. Patent No. 4,707,244 issued to Harman, III et al.; U.S. Patent No. 4,210,508 issued to Bergson; and U.S. Patent No. 3,223,609 issued to Reeds, Jr.

In particular, the Aquametry reference suggests that the problem of recombination can be addressed by eliminating surface deposits on the metal electrode wires. The reference specifically notes that soaking platinum, gold, or rhodium wires in hot HCl solution will remove oxides from those metals. The reference also suggests that recombination fostered by rhodium electrodes can be nearly eliminated by lowering the temperature and the current density of the cell and by diluting the sample gas with pure, dry nitrogen.

Although the Aquametry reference generally describes soaking rhodium wires in hot HCl solution to remove oxides as a possible way to reduce recombination, that reference nowhere suggests that such a treatment might effectively eliminate recombination in combination with particular rhodium electrode forming processes. Moreover, the reference's disclosure is based only on a review of the literature current as of 1984 and, in fact, is purely speculative; the effects on recombination of an HCl-cleansing step as applied to rhodium electrodes were not explored experimentally. Finally, the reference does not teach what other steps might be taken to facilitate use of rhodium electrodes in gases containing hydrogen, oxygen, or both.

A large number of references teach the use of rhodium electrodes. See, for example, U.S. Patent No. 4,990,236 issued to Sittler et al. (column 4, lines 41-43); U.S. Patent No. 4,925,646 issued to Tom et al. (column 13, lines 17-19); and U.S. Patent No. 4,842,709 issued to Mayeaux (column 4, lines 20-21). To date, rhodium electrodes have been preferred when the application of interest requires measurement of water in a sample gas stream having significant amounts of hydrogen. Platinum electrodes are preferred for measuring water in a sample gas stream having significant amounts of oxygen. This conventional wisdom is summarized, for example, in U.S. Patent No. 4,210,508 issued to Bergson: "Thus platinum is found to behave better with oxygen than does rhodium while rhodium behaves better with hydrogen than does platinum. Behaving better here has the significance that there is a greater catalytic recombination of hydrogen and oxygen in an oxygen stream with a rhodium cell than with a platinum cell while the reverse is true when the stream is one of hydrogen gas." Column 2, lines 30-37.

The problems experienced when using platinum electrodes in a sample gas stream having significant amounts of hydrogen are described in U.S. Patent No. 3,223,609 issued to Reeds, Jr. After a period of use, a black deposit, apparently platinum or a platinum compound, forms between the platinum electrodes. The deposit eventually builds up to a point where it forms a metallic bridge between adjacent turns of the electrodes and, because it is electrically conductive, the deposit causes a short circuit between the electrodes which results in cell failure. In addition, the inaccuracy of a cell using platinum electrodes in gas streams comprising more than fifty percent hydrogen is attributed primarily to recombination of the oxygen liberated by the electrolysis with the hydrogen stream, thus creating additional water which is again electrolyzed--possibly several times. The recombination of hydrogen and oxygen is apparently catalyzed by the presence of platinum or platinum compounds in the cell; both the electrodes themselves and the deposits between them have an effect on the rate of recombination. Column 1, line 51, to column 2, line 2. Reeds, Jr. patented an electrolytic hygrometer cell having at least one rhodium electrode. That cell ostensibly solved the problems experienced when using platinum electrodes in a sample gas stream having significant amounts of hydrogen.

Thus, it has been necessary to provide different cells depending upon the application (sample gas having oxygen or hydrogen or an inert gas) of interest. Platinum electrodes enhance recombination by a factor of about 1.6 in oxygen; rhodium electrodes enhance recombination by a factor of about four in hydrogen. Even when the preferred electrode material is used, recombination is a problem because the noble metals enhance recombination.

From EP 0 330 377 A2 a moisture-sensing a hygrometric element and a method for its manufacture are know. The electrolytic moisture-sensing mechanism according to this document is integrally formed on the surface of a substrate and may comprise rhodium electrodes.

To overcome the problem of recombination in electrolytic hydrometers, an improved process of manufacturing an electrolytic cell is provided. An object of the present invention is to provide an electrolytic cell that minimizes recombination errors when used to measure the concentration of water in a sample gas flow containing at least substantial amounts of hydrogen or oxygen. Another object is to provide such a process which will allow rhodium electrodes to be used to measure water in oxygen or hydrogen or inert gases; therefore, one electrode material is suitable for a variety of applications.

## Summary of the Invention

To achieve these and other objects, and in view of its purposes, the present invention provides an improved process of manufacturing a detecting unit for an electrolytic cell with rhodium electrodes. In the first step of the process, rhodium electrodes are preparing from relatively impure rhodium metal by (a) vacuum melting the rhodium metal, (b) cold drawing the rhodium metal into rhodium electrodes, and (c) cleaning the rhodium electrodes. Then, the rhodium electrodes are sealed and embedded in the glass tube of the detecting unit. The detecting unit having the embedded

rhodium electrodes is cleaned with a hot acid solution. Finally, the detecting unit is placed in the electrolytic cell.

It is to be understood that both the foregoing general description and the following detailed description are exemplary, but are not restrictive, of the invention which is defined by the attached independent claims. The subclaims define advantageous embodiments of the invention.

## Brief Description of the Drawing

The invention is best understood from the following detailed description when read in connection with the accompanying drawing. It is emphasized that, according to common practice, the various features of the drawing are not to scale. On the contrary, the dimensions of the various features are arbitrarily expanded or reduced for clarity. Included in the drawing are the following figures:

FIG. 1 is a longitudinal, cross-sectional view of a conventional type I electrolytic cell as disclosed in United States Patent No. 4,800,000 to D. Zatko;

FIG. 2 illustrates the mandrel and the rotating winder used in the conventional process to fabricate the detecting unit of the electrolytic cell shown in FIG. 1;

FIG. 3 illustrates the sealing device used in the conventional process to fabricate the detecting unit of the electrolytic cell shown in FIG. 1;

FIG. 4 is a flow chart illustrating the steps of the preferred embodiment of the improved process, according to the present invention, for manufacturing the detecting unit of an electrolytic cell with rhodium electrodes;

FIG. 5 shows the output response (as a graph) of a first electrolytic hygrometer, manufactured according to the present invention, to the introduction of an oxygen sample gas stream;

FIG. 6 shows the output response of a second electrolytic hygrometer, also manufactured according to the present invention, to the introduction of an oxygen sample gas stream;

Fig. 7 shows the output response of a conventional hygrometer used to measure the moisture concentration in a sample gas stream having a substantial concentration of hydrogen, illustrating the problem caused by the effect of recombination in the presence of hydrogen;

Fig. 8 shows the output response (as a graph) of a first electrolytic hygrometer, manufactured according to the present invention, to the introduction of a hydrogen sample gas stream; and

Fig. 9 shows the output response of a second electrolytic hygrometer, also manufactured according to the present invention, to the introduction of a hydrogen sample gas stream.

## Detailed Description of the Invention

Referring now to the drawing, like reference numerals refer to like elements throughout. FIG. 1 illustrates that an electrolytic cell **10** is known which includes a tubular glass detecting unit **12.** Detecting unit **12** passes a gas and has an inlet **14** and an outlet **16.** Unit **12** is positioned concentrically in a stainless steel protective housing **18.** A packing material **20,** typically an epoxy potting compound, fills the concentric area between unit **12** and housing **18.**

An inlet plug **22** surrounds and concentrically positions unit **12** at the inlet end of cell **10.** An inlet cap **24** is mounted in sealing engagement with a gasket **26** on the upper end of housing **18,** and is fixed in position by a nut **28.** Fittings **30, 32** are mounted as arms transversely of cap **24** and attach gas inlet and bypass gas outlet lines, respectively (not shown). Channel **34** conveys gas from fitting **30** through cap **24** to inlet **14** of unit **12.** Channel **36** is a bypass conduit connecting cap **24** to fitting **32** to pass gas from a source connected to fitting **30** to a collector connected to fitting **32.**

Extending through plug **22** is a tube **38** to admit epoxy **20** during manufacture of cell **10.** Tube **38** is plugged upon setting by epoxy **20.**

The outlet end of unit **12** is concentrically positioned in housing **18** by plug **40.** Electrode leads **42, 44,** positioned in plug **40,** are connected to the free ends of wires **46, 48** helically covering the interior of unit 12. Wires **46, 48** are usually made of platinum, iridium, rhodium, or another noble metal. Gold may also be suitable. A bottom cap **50** seats on a gasket **52** and is sealed to and mounted on housing **18** by a nut **54.** A gas outlet fitting **56** is mounted in

cap **50** as a side arm and receives gas from the interior of cap **50** and unit **12** via a channel **58.** Lead **42** extends externally of housing **18** through an electrically insulating packing **60** within a metallic contact arm **62** having a soldered tip **64.** Similarly, lead **44** is received in an electrically insulating packing **66** in a metallic contact arm **68** mounted in housing 18 and having a soldered tip **70.**

Wires **46, 48** are helically wound substantially the full length of unit **12** and are exposed to gas passing from inlet **14** to outlet **16.** The interior of unit **12,** including wires **46, 48,** is coated with a water absorbent (hygroscopic) film (such as phosphorous pentoxide, not shown) which will conduct the ions resulting from electrolysis of the moisture between the two electrodes. The electrolysis current will match the rate at which moisture molecules enter unit **12** when the system is in equilibrium. Detecting unit **12** is very long and narrow (on the order of 1 mm inside diameter and 100 mm length) to ensure that substantially all of the moisture in the gas contacts the hygroscopic film. Consequently, all water in the gas passing through detecting unit **12** will be subjected to electrolysis.

In moisture analysis by electrolytic hygrometry, water reacts with the hygroscopic film in contact with wires **46, 48** in electrolytic cell **10.** The water in the film is electrolyzed by an applied voltage to produce hydrogen and oxygen. The resulting current is an absolute measure of the rate of water absorption by the cell under Faraday's Law.

Erroneously high water readings for electrolytic hygrometers are caused by the recombination of hydrogen and oxygen to re-form water when the sample gas contains substantial amounts of hydrogen or oxygen. The recombination reaction proceeds according to the formula:

$$H_2 + 1/2\ O_2 \xrightarrow{\text{catalyst}} H_2O.$$

Both the noble metals and their oxides catalyze the recombination reaction. In fact, a main source of recombination is the catalytic activity of electrode wires **46, 48** in electrolytic cell **10.**

Minimization of recombination errors is important when an electrolytic hygrometer is used for industrial applications. It is important, for example, in the semiconductor industry where monitoring and controlling moisture in hydrogen- or oxygen-containing atmospheres affects product yield and quality.

The traditional way to fabricate detecting unit **12** of electrolytic cell **10** begins with a stainless steel mandrel **80** (see FIG. 2). Two, thin, platinum or rhodium wires **46, 48,** alternating with two, thin copper wires **82, 84,** are wound tightly around mandrel **80** using a rotating winder **86.** Copper wires **82, 84** hold wires **46, 48** in place on mandrel **80.** Wires **46, 48** and copper wires **82, 84** may each have a diameter of about 0.125 mm. The ends of the wires **46, 48, 82, 84** are welded at a predetermined length corresponding to the length of detecting unit **12** desired. Then, mandrel **80,** with wires **46, 48, 82, 84** wound around it, is removed from winder **86.**

Wound mandrel **80** is placed in the sealing device **90** shown in FIG. 3. Sealing device **90** may be rotated as shown by arrow A. Opposite ends of mandrel **80** are held by opposing chucks **92, 94.** A heating coil **96** surrounds mandrel **80.** Also surrounding mandrel **80** is the glass tube **98** which will be used to form detecting unit **12.** Three, separate steps are performed, during the manufacture of detecting unit **12,** in sealing device **90.**

First, the step of preheating is performed. The second step performed in sealing device **90** is to shift (in the direction of the dotted arrow B) glass tube **98** over wires **46, 48, 82, 84** on mandrel **80.** Glass tube **98** assumes the position shown by the dotted lines in Fig. 3. Finally, wires **46, 48, 82, 84** are sealed in glass tube **98.** This sealing step involves passing heating coil **96** over glass tube **98** in the direction of arrow C. The temperature of heating coil **96** is sufficient to melt glass tube **98** so that glass flows down approximately half the diameter of wires **46, 48, 82, 84** before the glass resolidifies or hardens. Consequently, electrode wires **46, 48** will extend inside the diameter of detecting unit **12** by about half their diameter, thereby providing adequate area for contact with the gas stream under test.

Once wires **46, 48, 82, 84** are sealed in glass tube **98,** mandrel **80** is placed in a pulling device (not shown). Opposite ends of the mandrel are grasped and pulled by the device. Mandrel **80** is stretched and, therefore, becomes thinner. This allows mandrel **80** to slide out from wires **46, 48, 82, 84** and glass tube **98,** leaving glass tube **98** with wires **46, 48, 82, 84** sealed inside glass tube **98.**

Copper wires **82, 84,** having performed their function, are then dissolved in strong nitric acid ($HNO_3$). Glass tube **98** is installed in housing **18.** Finally, the hygroscopic film (typically phosphorous pentoxide, $P_2O_5$) is deposited on the inner diameter of glass tube **98** and over electrode wires **46, 48.** All of these steps are well known in the art.

Thus, the conventional fabrication of detecting unit **12** of electrolytic hygrometer **10** requires a delicate process wherein glass tube **98** is melted in a manner designed to half cover the thin electrode wire coil when it hardens. This step is not only difficult to reproduce, it poses numerous quality problems. As an example, bubbles in the glass and poor (electrode) metal-to-glass contact cause rejects and reduce manufacturing yield.

The conventional sealing step also enhances recombination indirectly. Although the noble metals used to

form the electrodes (e.g., platinum and rhodium) catalyze the recombination reaction only minimally, having a negligible effect on hygrometer sensitivity, the noble metal oxides are active catalysts. Once formed, the oxides of the noble metals retain their oxygen with tenacity. Oxidation of the electrode wires occurs during the sealing step and, therefore, the sealing step indirectly promotes recombination.

Despite its drawbacks, the conventional process for manufacturing detecting unit **12** of electrolytic hygrometer **10**, as outlined above, results in a useful hygrometer. The performance characteristics of such an hygrometer can be improved, however, by addressing several drawbacks found in the process for manufacturing detecting unit **12.** A preferred embodiment of the improved process **100** for manufacturing detecting unit **12** of electrolytic cell **10** is illustrated in FIG. 4.

The first step **110** of improved process **100** is to prepare the rhodium wire. First step **110** involves vacuum melting **112,** cold drawing **114,** and cleaning **116** the as-received rhodium to form high purity rhodium wire. The second step **120** of improved process 100 is to seal and embed rhodium wires 46, 48 in glass tube 98 of detecting unit 12. Detecting unit 12 having rhodium wires 46, 48 is then cleaned, in third step 130 of improved process 100, with hot HCl. Finally, in fourth step 140 of improved process 100, detecting unit 12 is placed in electrolytic cell 10. Fourth step 140 involves installing 142 detecting unit 12 in housing 18 of electrolytic cell 10 and depositing 144 the hygroscopic film (typically phosphorous pentoxide, $P_2O_5$) on the inner diameter of glass tube 98 of detecting unit 12 and over rhodium electrode wires 46, 48.

## A. Preparation of Rhodium Wire

### *1. Vacuum Melting*

The process of melting rhodium requires careful control of atmospheric conditions because liquid rhodium will dissolve a large quantity of gases such as oxygen. These gases are rejected during solidification. In addition, heating rhodium in air at temperatures above about 600°C will produce an undesirable thin oxide film. Process 100 of the present invention prevents the inclusion of gases in, and the formation of an oxide film on, the rhodium metal during formation. Vacuum melting step 112 of process 100 yields a very pure, high quality rhodium.

For cost reasons, a minimum purity rhodium metal is selected. The as-received rhodium is vacuum melted so that the liquid rhodium does not have dissolved gases in it. Such gases would be out-gassed during the sealing procedure discussed above, producing an inferior glass-to-metal seal. The rhodium is placed in a crucible which, in turn, is placed in a vacuum-melting furnace. The furnace is closed and the chamber is evacuated to a "hard" vacuum of between 1.33 x $10^{-5}$ Pa and 1.33 x $10^{-6}$ Pa. The rhodium is then heated to between 2160 and 2260°C (200-300°C over its melting point of about 1960°C), stirred, and held at this temperature for up to 5 minutes to assure total melting. The molten rhodium is poured into a graphite or copper mold at a temperature of about 2035°C (about 75°C over its melting point). The rhodium ingot is allowed to freeze and cool before it is removed from the furnace. Vacuum melting procedure 112 of first step 110 of improved process 100 yields a high purity rhodium metal.

### *2. Cold Drawing*

Rhodium work hardens rapidly. Plastic deformation changes the internal structure of a metal and, therefore, the properties of that metal. Plastically deformed metals have a distorted structure which reduces the mean free path of electron movements and, therefore, increases the resistivity of the metal. An increase in hardness and strength also results. The increase in hardness that results from plastic deformation is called strain hardening. An increase in both tensile strength and yield strength accompanies this increase in hardness.

An index of the amount of plastic deformation is the percent of cold work which the material has undergone. Cold work is the amount of plastic strain introduced in a material during processing, expressed by the percent decrease in cross-sectional area from deformation:

$$\%CW = [(A_O - A_f) \div A_O] \times 100,$$

where $A_O$ and $A_f$ are the original and final areas, respectively. Typically, metal wire is work hardened by "drawing" the wire, while "cold" (i.e., below the metal recrystallization temperature), through a series of progressively smaller dies. This process reduces the diameter (hence, area) of, and plastically deforms, the wire. Consequently, the wire is work hardened.

A tensile strength of 137 to 151 kN/$cm^2$ (200,000 to 220,000 psi) can be obtained in cold drawn rhodium wire. The rhodium wire used in detecting unit 12 of electrolytic cell 10 of the present invention is subject to cold drawing process step 114. Following the vacuum melting and cold drawing procedures, 112 and 114, respectively, the rhodium

wire meets the following specifications:

| Material Quality | Measurement |
|---|---|
| Purity | 99.9% |
| Diameter | 0.122 to 0.132 mm |
| Tensile Strength | (165,000 to 185,000 psi) 114 to 128 kN/$cm^2$ |
| Elongation | 10% nominal |

*3. Cleaning*

A solution of Chemtronics® CFC-free Electro-Wash 2000 precision cleaner and degreaser (available from Chemtronics Inc. of Kennesaw, Georgia) is then used to clean the rhodium wires in cleaning step **116** following vacuum melting **112** and cold drawing **114** procedures.

B. Seal and Embed Wires in Detecting Unit

Once the rhodium metal has been vacuum melted **112** to form wires, and the wires have been cold drawn **114** and cleaned **116,** the rhodium wires can be used to manufacture detecting unit **12** of electrolytic cell **10** as described above. Two, thin, rhodium wires **46, 48,** alternating with two, thin copper wires **82, 84,** are wound tightly around mandrel **80** as shown in FIG. 2. Wound mandrel 80 is placed in sealing device **90** shown in FIG. 3 and wires **46, 48, 82, 84** are sealed in glass tube **98.** Once wires **46, 48, 82, 84** are sealed in glass tube **98,** mandrel **80** is placed in a pulling device (not shown). Mandrel **80** is stretched and, therefore, becomes thinner. This allows mandrel **80** to slide out from wires **46, 48, 82, 84** and glass tube **98,** leaving glass tube **98** with wires **46, 48, 82, 84** sealed inside it. Copper wires **82, 84** are then dissolved in strong nitric acid ($HNO_3$), completing second step **120** of process **100.**

C. Clean with Hydrochloric Acid

At this point in process **100** of the present invention, the rhodium electrodes of detecting unit **12** of electrolytic cell **10** are in position. Detecting unit **12** is then placed within a test tube having a solution of about 37 % hydrochloric acid. The test tube containing detecting unit **12** is placed, in turn, in a boiling water bath for about 20 minutes. Thereafter, detecting unit **12** is rinsed with water, acetone, or both, and dried. This completes third (cleaning) step **130** of improved process **100.** Rhodium is resistant to corrosion by nearly all aqueous solutions at room temperature, including concentrated acids such as hydrochloric acid, nitric acid, and aqua regia. Hydrochloric acid is preferred because it is a very strong acid able to perform well the function of third step **130:** remove all organic oxides and deposits from the rhodium electrodes.

D. Place The Detecting Unit in The Electrolytic Cell

Detecting unit **12** is then installed **142** in housing **18** of electrolytic cell **10.** Finally, the hygroscopic film (typically phosphorous pentoxide, $P_2O_5$) is deposited **144** on the inner diameter of glass tube **98** of detecting unit **12** and over electrode wires **46, 48.** This fourth step **140** of placing detecting unit **12** in electrolytic cell **10** is well known in the art.

It is known that rhodium electrodes are suitable to measure moisture in inert gases. Rhodium electrodes are also preferred to measure water in a sample gas having hydrogen. Platinum electrodes are preferred, however, to measure water in a sample gas having oxygen. The process of the present invention allows rhodium electrodes to be used to measure water in a sample gas comprising oxygen, hydrogen, or an inert gas; therefore, one electrode material is suitable for all applications. It is no longer necessary to provide different cells depending upon the application (sample gas containing oxygen or hydrogen or an inert gas) of interest. Moreover, electrolytic cell **10** produced in accordance with the present invention reduces the recombination effect--in either hydrogen or oxygen--to a negligible amount.

Examples

A series of test examples illustrates the excellent results achieved with electrolytic hygrometers manufactured according to process **100** of the present invention. Such hygrometers were tested for recombination. The results show that the effect of recombination in both oxygen and hydrogen gases is suppressed.

FIG. 5 shows the output response (as a graph) of a first electrolytic hygrometer, manufactured according to the present invention, to the introduction of an oxygen sample gas stream. The sample gas initially introduced into the

electrolytic hygrometer was a relatively dry nitrogen gas. The "background" reading of this particular hygrometer in dry nitrogen gas is 27 ppb by volume water vapor, shown as portion "A" of the graph in FIG. 5. At the time indicated by "B" on the graph of FIG. 5, the hygrometer was recalibrated in preparation for analyzing oxygen rather than nitrogen. The recalibration calculation involves a factor of 1.63; therefore, the hygrometer immediately dropped (portion "C" of the graph) to a value of about 17 ppb (27 ÷ 1.63 ❹ 17) at the time indicated by "D" on the graph.

At the time indicated by "D" on the graph of FIG. 5, the gas stream was switched to a substantially pure oxygen gas. The graph of the hygrometer reading increased to a peak of about 19 ppb at time "E," which is somewhat higher than the steady-state moisture reading. The steady-state moisture level of about 18 ppb is shown as portion "F" of the graph in FIG. 5. The increase of 1 ppb, to 19 ppb at the peak "E" from the steady-state value of 18 ppb, represents the sum of several contributing factors. One factor is that moisture tends to desorb more readily from tubing and other flow components in oxygen (or in hydrogen) than in nitrogen. This residual moisture prompts the higher initial reading.

The graph of FIG. 5 illustrates that the switch to oxygen sample gas for a first electrolytic hygrometer, manufactured according to the present invention, caused negligible affect on the reading of the hygrometer which might be attributed to recombination. FIG. 6 shows the output response of a second electrolytic hygrometer, also manufactured according to the present invention, to the introduction of an oxygen sample gas stream. Again, any effect of recombination is suppressed.

FIGS. 8 and 9 show the output responses (as graphs) of two electrolytic hygrometers, manufactured according to the present invention, to the introduction of a hydrogen sample gas stream. The sample gas initially introduced into the electrolytic hygrometer was a relatively dry nitrogen gas, shown as portion "A" of the graphs in FIGS. 8 and 9. At the time indicated by "B" on the graphs of FIGS. 8 and 9, the hygrometers were recalibrated in preparation for analyzing hydrogen rather than nitrogen. The recalibration calculation involves a factor of 4; therefore, the hygrometer readings immediately dropped (portion "C" of the graphs) to the time indicated by "D" on the graphs.

The gas stream was then switched to a substantially pure hydrogen gas. The graphs of the hygrometer readings experienced a small bump at time "E," likely caused by residual moisture in tubing and other flow components, before rising to the steady-state moisture level shown as portion "F" of the graphs of FIGS. 8 and 9. Again, any effect of recombination is suppressed.

FIG. 7 illustrates the problem caused by the effect of recombination in the presence of hydrogen. A conventional hygrometer was used to measure the moisture concentration in a sample gas of substantially pure hydrogen. As for the other tests, the sample gas initially introduced into the electrolytic hygrometer was a relatively dry nitrogen gas. The "background" amount of moisture was read by the hygrometer and shown as portion "A" of the graph in FIG. 7. At the time indicated by "B" on the graph of FIG. 7, the hygrometer was recalibrated in preparation for analyzing hydrogen rather than nitrogen. The hygrometer immediately dropped along portion "C" of the graph. At time "D," the gas stream was switched to the hydrogen gas sample. The recombination of hydrogen from the sample gas with oxygen caused a large rise in the water reading (toward 100 ppb and increasing). The "run away" hygrometer was quickly turned off and the graph shown in FIG. 7 gradually decayed.

Although illustrated and described herein with reference to certain specific embodiments, the present invention is nevertheless not intended to be limited to the details shown. Rather, various modifications may be made in the details within the scope and range of equivalents of the claims. Specifically, the rhodium electrodes may be formed as thin ribbons rather than the usual helically wound round wire electrodes. Although preferable, the electrodes need not be of pure rhodium; they may be composed of an alloy of rhodium. See, e.g., U.S. Patent No. 3,954,590 issued to Czuha, Jr. (disclosing an iridium-rhodium alloy, thin ribbon electrode).

## Claims

**1.** A process of manufacturing an electrolytic hygrometer, having a detecting unit with rhodium electrodes sealingly embedded in a glass tube and minimising recombination errors in the measurement of moisture in a sample gas stream with a substantial concentration of at least one of the elements hydrogen and oxygen, said process comprising the steps of:

providing rhodium metal;
preparing rhodium electrodes from the rhodium metal by:

(a) vacuum melting the rhodium metal (step 112),
(b) cold drawing the rhodium metal into rhodium electrodes (step 114), and
(c) cleaning the rhodium electrodes (step 116);

sealingly embedding the rhodium electrodes

in the glass tube of the detecting unit (step 120);
cleaning the detecting unit having the embedded rhodium electrodes with a hot acid solution (step 130); and
placing the detecting unit in the electrolytic cell (step 140).

**2.** The process as claimed in claim 1 wherein said step of vacuum melting (step 112) yields a rhodium metal having a purity above 99%.

**3.** The process as claimed in claim 1 or claim 2 wherein said step of vacuum melting (step 112) includes placing the rhodium metal in a crucible, placing the crucible in a chamber of a vacuum-melting furnace, closing the furnace, evacuating the chamber to a vacuum of between $1.33 \times 10^{-5}$ Pa and $1.33 \times 10^{-6}$ Pa, heating the furnace containing the rhodium metal to between 2160 and 2260°C, stirring and holding the temperature of the rhodium metal for up to 5 minutes to assure total melting, pouring the molten rhodium metal into a mold at a temperature of about 2035°C, allowing the rhodium metal to cool, and removing the rhodium metal from the furnace.

**4.** The process as claimed in one of the claims 1 to 3 wherein said step of cold drawing (step 114) yields a rhodium wire having a diameter between 0.122 to 0.132 nun and a tensile strength between 114 to 128 $kN/cm^2$ (165,000 to 185,000 psi).

**5.** The process as claimed in one of the claims 1 to 4 wherein a cleaning and degreasing material is applied during said step of cleaning the rhodium electrodes (step 116).

**6.** The process as claimed in one of the claims 1 to 5 wherein the hot acid solution used in said step of cleaning the detecting unit (step 130) having the embedded rhodium electrodes is a hot hydrochloric acid solution.

**7.** The process as claimed in claim 6 wherein said step of cleaning the detecting unit having the embedded rhodium electrodes with a hot acid solution includes placing che detecting unit within a test tube having a solution of about 37% hydrochloric acid, placing the test tube in a boiling water bath for about 20 minutes, rinsing the detecting unit with at least one of water and acetone, and drying the detecting unit.

**8.** The process as claimed in one of the claims 1 to 7 wherein said step of placing the detecting unit in the electrolytic cell includes installing the detecting unit in the housing of the electrolytic cell and depositing a hygroscopic film on the inner diameter of the detecting unit and over the rhodium electrodes.

**9.** The electrolytic cell manufactured according to the process of one of the claims 1 to 8.

**Patentansprüche**

**1.** Ein Verfahren zur Herstellung eines elektrolytischen Hygrometers, das eine Nachweiseinheit mit Rhodiumelektroden aufweist, welche in einem Glasrohr dichtend eingebettet sind, und das Rekombinationsfehler bei der Feuchtigkeitsmessung eines Probengasstroms mit einer wesentlichen Konzentration von zumindest einem der Elemente Wasserstoff und Sauerstoff minimiert, wobei das Verfahren aus folgenden Schritten besteht:

Bereitstellen von Rhodiummetall;

Vorbereiten von Rhodiumelektroden aus dem Rhodiummetall durch:

(a) Vakuumschmelzen des Rhodiummetalls (Schritt 112),

(b) Kaltziehen des Rhodiummetalls in Rhodiumelektroden (Schritt 114), und

(c) Reinigen der Rhodiumelektroden (Schritt 116);

dichtendes Einbetten der Rhodiumelektroden in das Glasrohr der Nachweiseinheit (Schritt 120);

Reinigen der Nachweiseinheit, die die eingebetteten Rhodiumelektroden aufweist, mit einer heißen Säurelösung (Schritt 130); und

Anbringen der Nachweiseinheit in der elektrolytischen Zelle (Schritt 140).

2. Verfahren gemäß Anspruch 1, wobei der Schritt des Vakuumschmelzens (Schritt 112) ein Rhodiummetall mit einer Reinheit von mehr als 99 % ergibt.

3. Verfahren gemäß Anspruch 1 oder Anspruch 2, wobei der Schritt des Vakuumschmelzens (Schritt 112) das Anbringen des Rhodiummetalls in einem Tiegel, das Anbringen des Tiegels in einer Kammer eines Vakuumschmelzofens, das Schließen des Ofens, das Evakuieren der Kammer auf ein Vakuum von 1,33 x $10^{-5}$ Pa bis 1,33 x $10^{-6}$ Pa, das Heizen des das Rhodiummetall enthaltenden Ofens auf 2160 bis 2260 °C, das Rühren und das Halten der Temperatur des Rhodiummetalls für bis zu 5 Minuten, um vollständiges Schmelzen sicherzustellen, das Gießen des geschmolzenen Rhodiummetalls in eine Gießform bei einer Temperatur von ungefähr 2035 °C, das Auskühlen lassen des Rhodiummetalls und das Entfernen des Rhodiummetalls aus dem Ofen.

4. Verfahren gemäß einem der Ansprüche 1 bis 3, wobei der Schritt des Kaltziehens (Schritt 114) einen Rhodiumdraht mit einem Durchmesser von 0,122 bis 0,132 mm und einer Zugfestigkeit von 114 bis 128 kN/$cm^2$ (165.000 und 185.000 psi) erzeugt.

5. Verfahren gemäß einem der Ansprüche 1 bis 4, wobei ein Reinigungs- und Entfettungsmaterial während des Schritts des Reinigens der Rhodiumelektroden (Schritt 116) aufgetragen wird.

6. Verfahren gemäß einem der Ansprüche 1 bis 5, wobei die beim Schritt des Reinigens der Nachweiseinheit (Schritt 130), welche die eingebetteten Rhodiumelektroden aufweist, verwendete heiße Säurelösung eine heiße Chlorwasserstoffsäurelösung ist.

7. Verfahren gemäß Anspruch 6, wobei der Schritt des Reinigens der Nachweiseinheit, die die eingebetteten Rhodiumelektroden aufweist, mit einer heißen Säurelösung das Anbringen der Nachweiseinheit innerhalb eines Reagenzglases mit einer Lösung von ungefähr 37 % Chlorwasserstoffsäure, das Anbringen des Reagenzglases in einem siedenden Wasserbad für ungefähr 20 Minuten, das Spülen der Nachweiseinheit mit zumindest Wasser oder Aceton und das Trocknen der Nachweiseinheit umfasst.

8. Verfahren gemäß einem der Ansprüche 1 bis 7, wobei der Schritt des Anbringens der Nachweiseinheit in der elektrolytischen Zelle das Installieren der Nachweiseinheit im Gehäuse der elektrolytischen Zelle und das Ablagern eines hygroskopischen Films am Innendurchmesser der Nachweiseinheit und über den Rhodiumelektroden umfasst.

9. Die elektrolytische Zelle, die gemäß dem Verfahren einer der Ansprüche 1 bis 8 hergestellt wird.

**Revendications**

1. Un processus de fabrication d'un hygromètre électrolytique possédant une unité détectrice munie d'électrodes de rhodium encastrées de façon étanche dans un tube de verre et minimisant des erreurs de recombinaison dans la mesure de l'humidité dans un flux de gaz échantillon ayant une concentration considérable d'au moins un des éléments hydrogène ou oxygène, ledit processus comprenant les étapes consistant :

à fournir du métal rhodium ;

à préparer des électrodes de rhodium à partir du métal rhodium par:

(a) fusion sous vide du métal rhodium (étape 112),

(b) étirage à froid du métal rhodium en électrodes de rhodium (étape 114), et

(c) nettoyage des électrodes de rhodium (étape 116);

à encastrer de façon étanche les électrodes de rhodium dans le tube de verre de l'unité détectrice (étape 120) ;

à nettoyer l'unité détectrice possédant les électrodes de rhodium encastrées avec une solution acide chaude

(étape 130) ; et

à placer l'unité détectrice dans la cellule électrolytique (étape 140).

**2.** Le processus tel que revendiqué dans la revendication 1 dans lequel ladite étape de fusion sous vide (étape 112) donne un métal rhodium ayant une pureté supérieure à 99 %.

**3.** Le processus tel que revendiqué dans la revendication 1 ou la revendication 2 dans lequel ladite étape de fusion sous vide (étape 112) consiste à placer le métal rhodium dans un creuset, à placer le creuset dans une chambre d'un four de fusion sous vide, à fermer le four, à faire le vide dans la chambre jusqu'à un vide compris entre 1,33 x $10^{-5}$ Pa et 1,33 x $10^{-6}$ Pa, à chauffer le four contenant le métal rhodium jusqu'à entre 2 160 et 2 260 °C, à agiter et à maintenir la température du métal rhodium pendant jusqu'à 5 minutes afin de garantir une fusion totale, à verser le métal rhodium en fusion dans un moule à une température d'environ 2 035 °C, à laisser refroidir le métal rhodium et à retirer le métal rhodium du four.

**4.** Le processus tel que revendiqué dans l'une des revendications 1 à 3 dans lequel ladite étape d'étirage à froid (étape 114) donne un fil de rhodium ayant un diamètre compris entre 0,122 et 0,132 mm et une résistance à la traction compris entre 114 et 128 kN/$cm^2$ (165 000 à 185 000 psi).

**5.** Le processus tel que revendiqué dans l'une des revendications 1 à 4 dans lequel un produit de nettoyage et de dégraissage est appliqué durant ladite étape de nettoyage des électrodes de rhodium (étape 116).

**6.** Le processus tel que revendiqué dans l'une des revendications 1 à 5 dans lequel la solution acide chaude utilisée dans ladite étape de nettoyage de l'unité détectrice (étape 130) munie des électrodes de rhodium encastrées est une solution d'acide chlorhydrique chaude.

**7.** Le processus tel que revendiqué dans la revendication 6 dans lequel ladite étape de nettoyage avec une solution acide chaude de l'unité détectrice munie des électrodes de rhodium encastrées consiste à placer l'unité détectrice à l'intérieur d'un tube à essai ayant une solution à environ 37 % d'acide chlorhydrique, à placer le tube à essai dans un bain d'eau bouillante pendant environ 20 minutes, à rincer l'unité détectrice avec au moins soit de l'eau, soit de l'acétone et à sécher l'unité détectrice.

**8.** Le processus tel que revendiqué dans l'une des revendications 1 à 7 dans lequel ladite étape consistant à placer l'unité détectrice dans la cellule électrolytique consiste à installer l'unité détectrice dans le logement de la cellule électrolytique et à déposer un film hygroscopique sur le diamètre interne de l'unité détectrice et pardessus les électrodes de rhodium.

**9.** La cellule électrolytique fabriquée selon le processus de l'une des revendications 1 à 8.

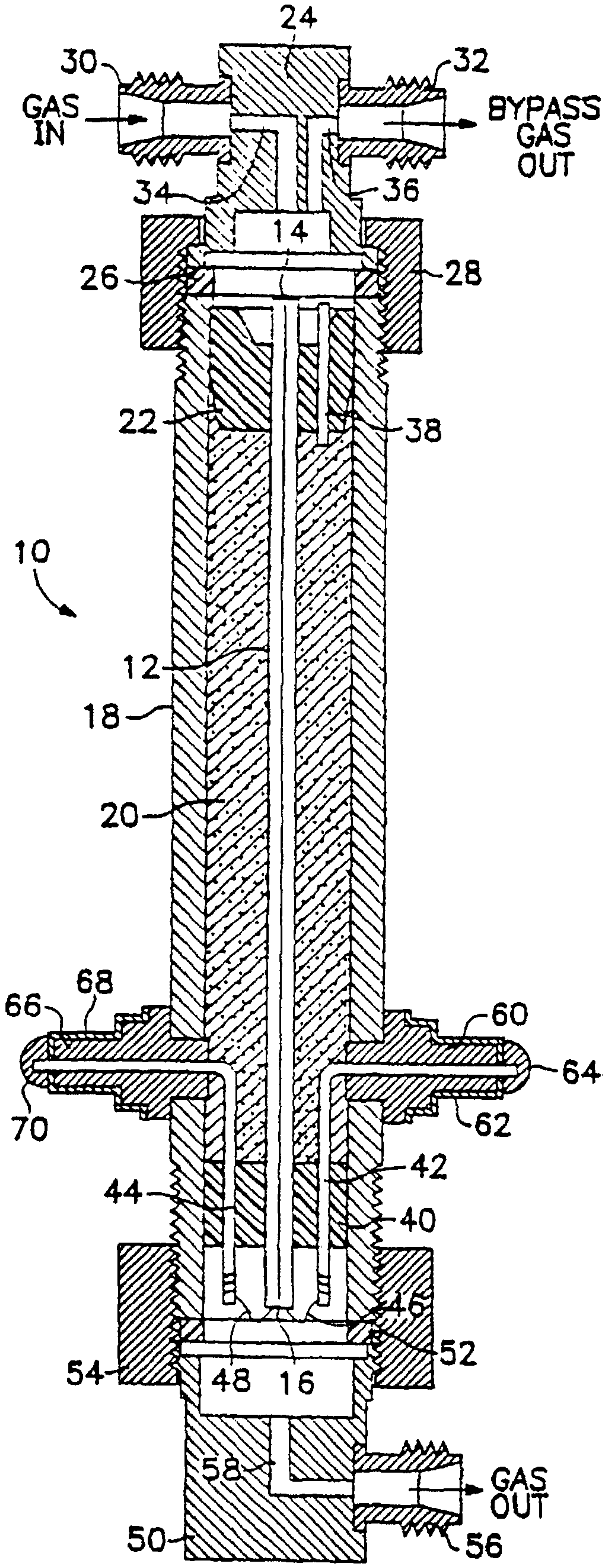


FIG. 1
(PRIOR ART)

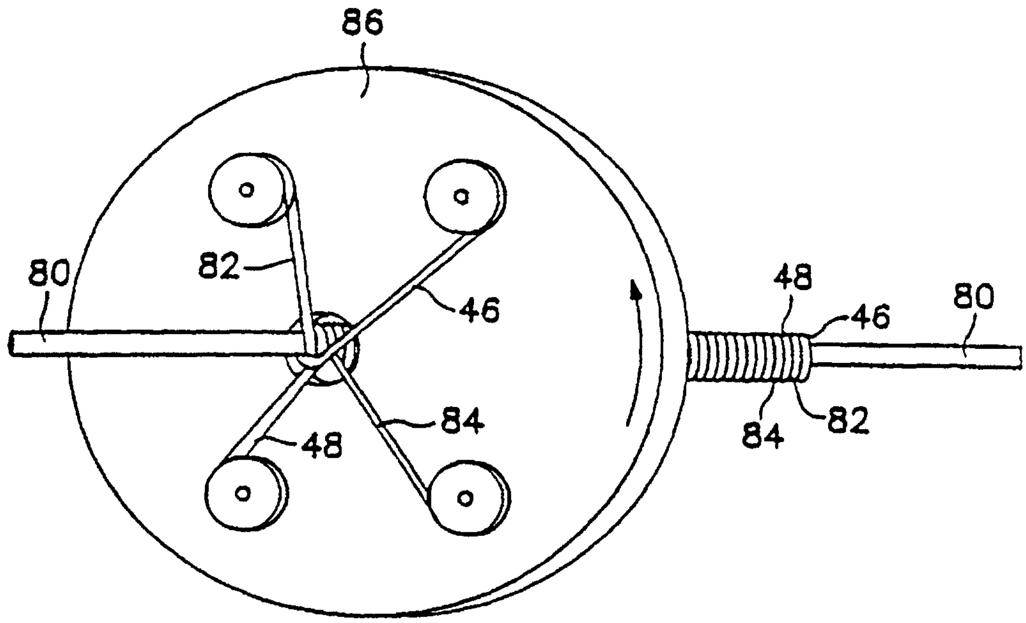


FIG. 2
(PRIOR ART)

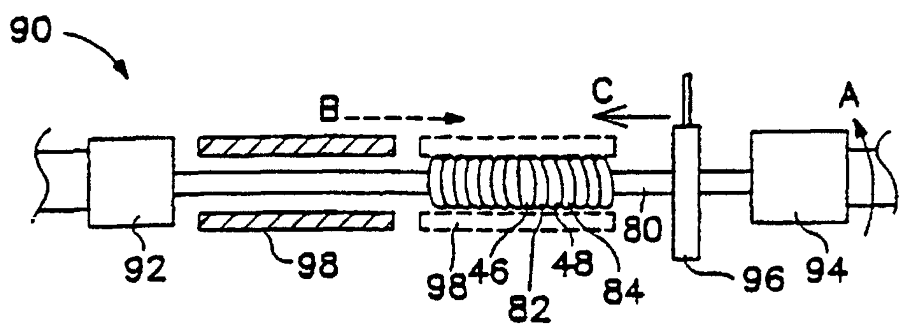


FIG. 3
(PRIOR ART)

**PROCESS 100**

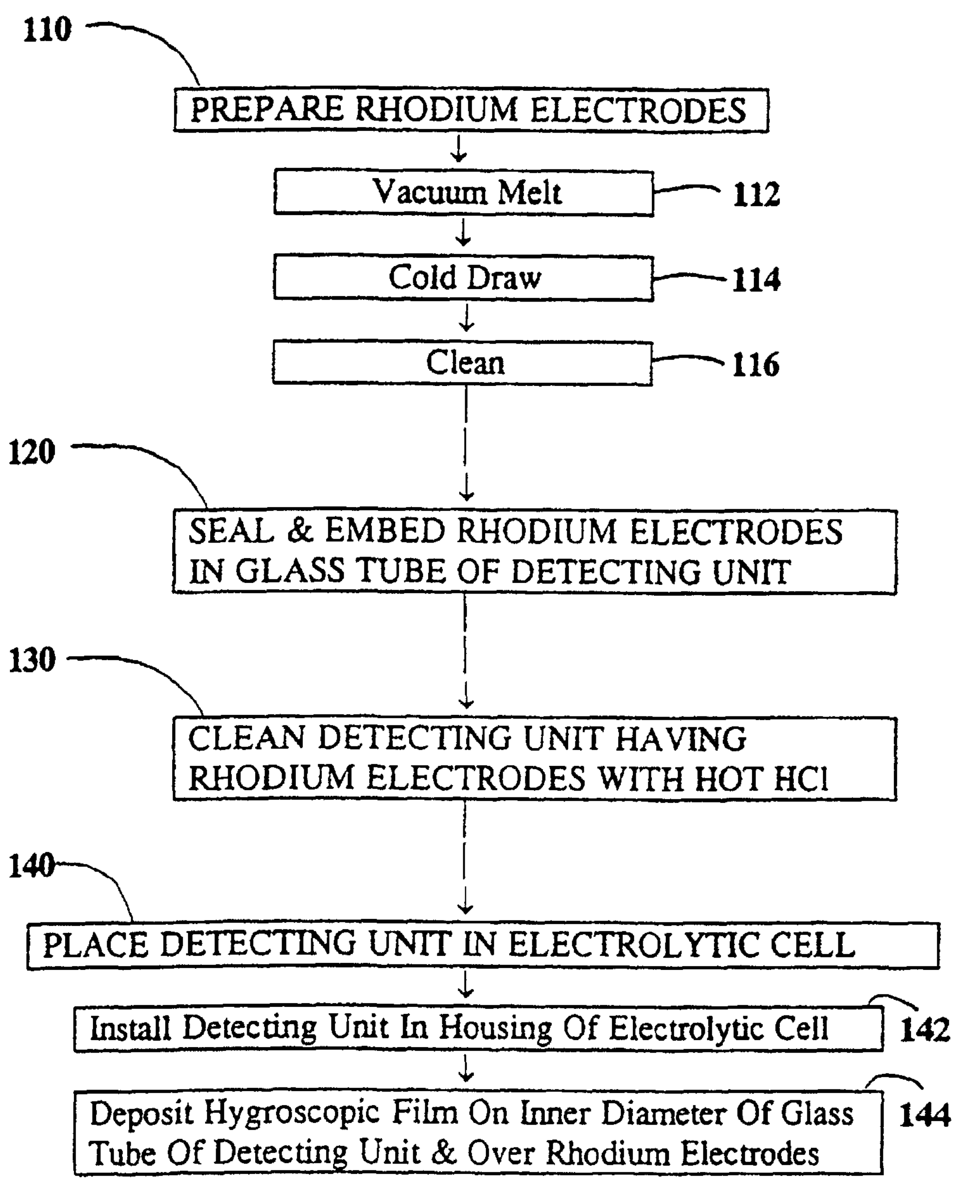


FIG. 4

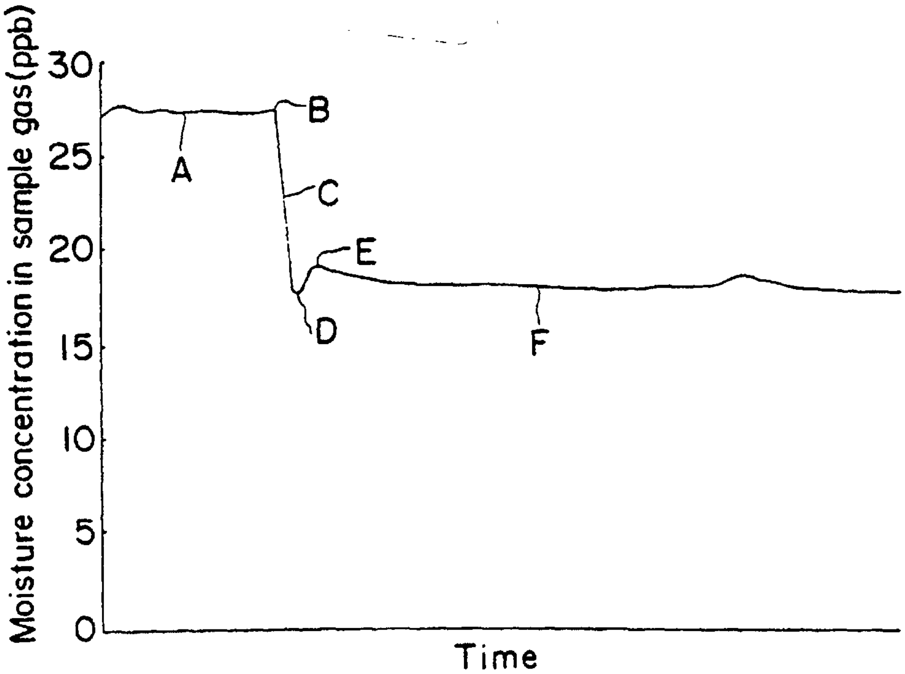
Moisture concentration in sample gas (ppb)
30
25
20
15
10
5
0
Time
A
B
C
D
E
F

FIG. 5

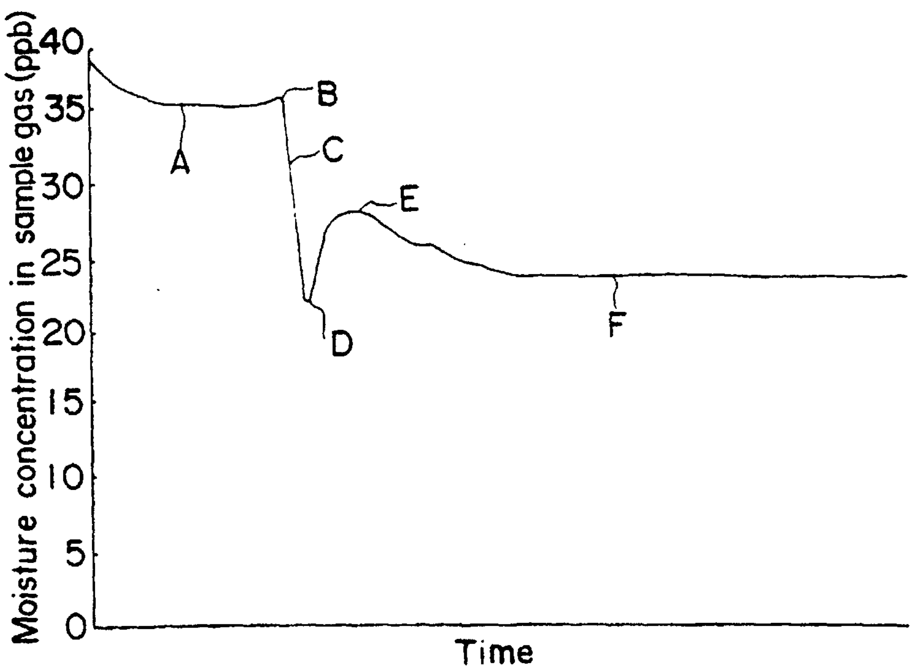
Moisture concentration in sample gas (ppb)
40
35
30
25
20
15
10
5
0
Time
A
B
C
D
E
F

FIG. 6

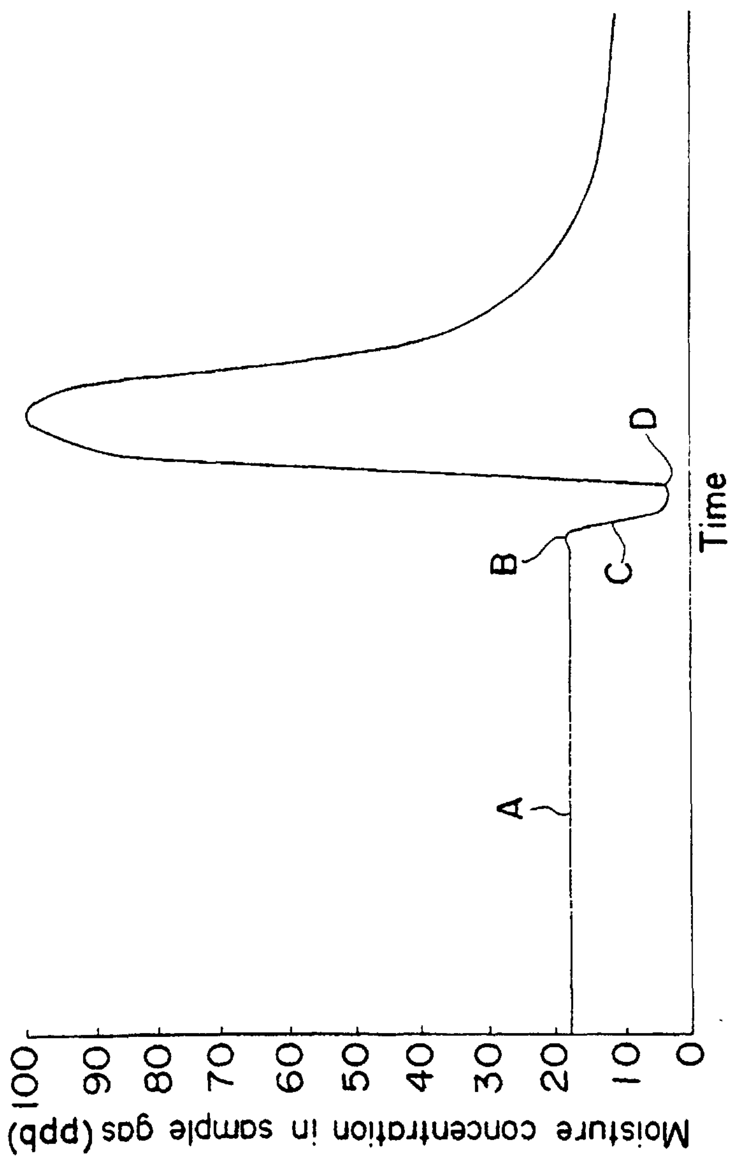
Moisture concentration in sample gas (ppb)
100
90
80
70
60
50
40
30
20
10
0
A
B
C
D
Time

FIG.7

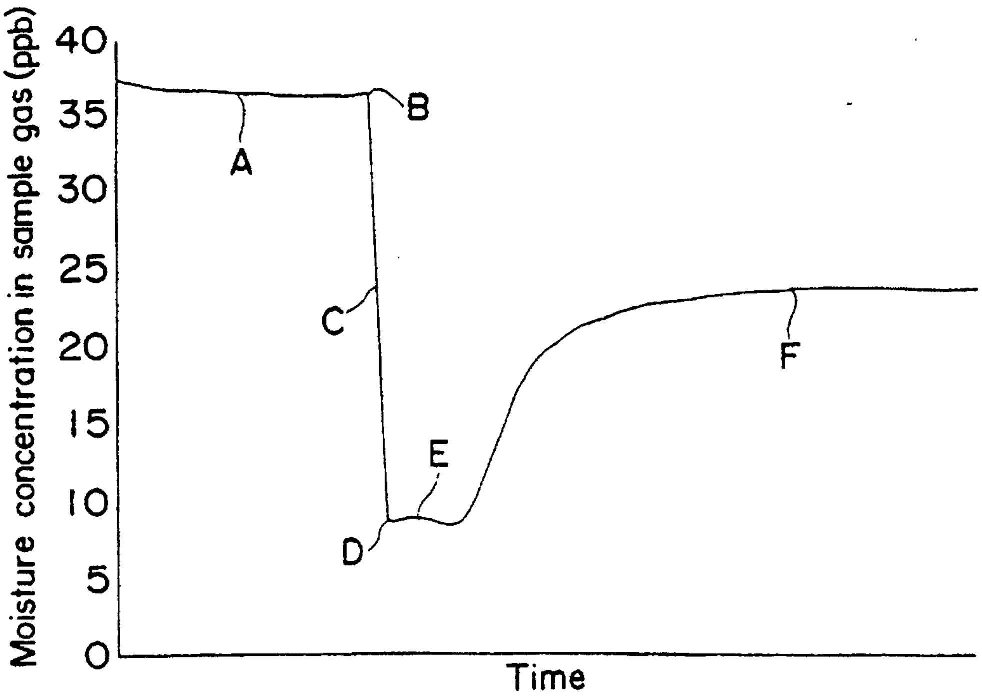
Moisture concentration in sample gas (ppb)
40
35
30
25
20
15
10
5
0
A
B
C
D
E
F
Time

FIG. 8

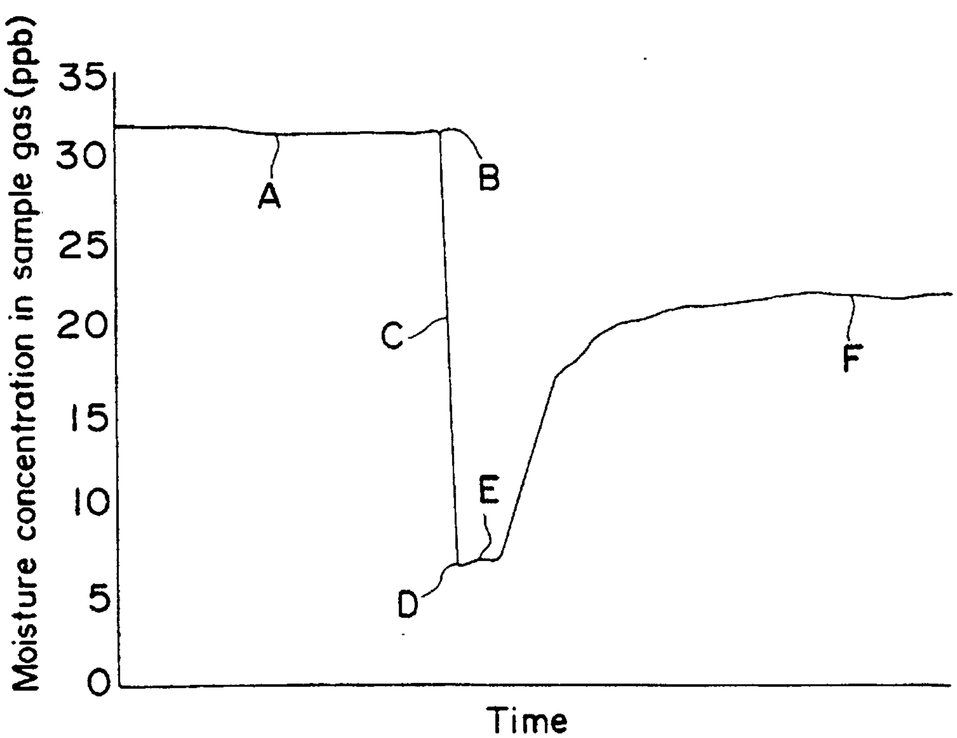
Moisture concentration in sample gas (ppb)
35
30
25
20
15
10
5
0
A
B
C
D
E
F
Time

FIG. 9